# DEMANDE DE BREVET EUROPEEN

(11) **EP 1 640 890 A1**
(43) Date de publication de la demande: **29.03.2006**
(21) Numéro de dépôt: 05291835.6
(22) Date de dépôt: 06.09.2005
(51) Int. Cl.: G06K 9/00, G06F 3/033

(54) **Procédé de saisie de caractères manuscrits**

(30) Priorité: 27.09.2004 FR 0410193
(71) Demandeur: FRANCE TELECOM, 75015 Paris (FR)
(72) Inventeur: Genestier, Philipp, 38570 Hurtières (FR); Teyssier, Henri, 38330 St Nazaire Les Eymes (FR)
(74) Mandataire: Boire, Philippe Maxime Charles

(57) **Abrégé**

Un procédé comprend une transmission d'un caractère manuscrit saisi à un serveur applicatif (7) par l'intermédiaire d'un terminal sans fil de communication (20), et la réception d'un message contenant un résultat d'une reconnaissance du caractère. Le résultat est présenté puis validé ou corrigé au moyen du terminal en exécutant des codes de programmation inscrits dans un module d'identification d'abonné (2) contenu dans le terminal (20). Le procédé est compatible avec l'utilisation, pour le terminal (20), d'un équipement de communication (1) sans fil ayant une capacité limitée de traitement de données.

## Description

La présente invention concerne un procédé de saisie de caractères manuscrits. Elle concerne aussi un module d'identification d'abonné pour équipement sans fil de communication, un terminal de communication et un système, adaptés pour mettre en oeuvre un tel procédé de saisie.

On entend par caractère manuscrit, toute marque écrite ou tracée manuellement sur une page, quelque soit le type du caractère. Ce peut être une lettre, un chiffre, un symbole, un trait, par exemple un trait de biffage, un signe utilisé pour cocher une case ou indiquer une sélection, etc. Dans certaines circonstances, le caractère manuscrit peut correspondre à une absence de marque, par exemple lors d'une sélection, une validation ou un refus. Un caractère peut aussi être composé d'un ensemble de plusieurs lettres, chiffres ou symboles associés et destinés à être traités simultanément.

On entend par page la portion de surface sur laquelle un caractère est tracé. Lors d'un traitement informatique, la page désigne un ensemble de points repérés par deux coordonnées, à chacun desquels est associée une valeur de paramètre, telle qu'une valeur d'intensité lumineuse, une valeur de couleur, ou une valeur de tension de contact par exemple.

Il est connu de saisir des caractères manuscrits en utilisant un périphérique adapté relié à une unité informatique telle qu'un ordinateur de bureau, un ordinateur portable ou un assistant personnel. Le périphérique de saisie de caractères manuscrits peut être un stylo optique ou une surface de détection tactile, notamment.

Un programme de reconnaissance de caractères permet alors d'identifier chaque caractère manuscrit saisi à un caractère informatique, de sorte que le caractère peut ensuite être lu et utilisé lors de l'exécution ultérieure d'une application logicielle. Or le caractère manuscrit peut être déformé ou mal saisi. Il est alors incorrectement reconnu lors de l'exécution du programme de reconnaissance. Il est par conséquent nécessaire que le résultat de la reconnaissance du caractère soit vérifié par un utilisateur.

Le programme de reconnaissance peut être exécuté dans l'unité informatique à laquelle est relié le périphérique de saisie. Dans ce cas, le résultat de la reconnaissance du caractère est directement présenté à l'utilisateur, par exemple sur un écran de l'unité informatique, afin que l'utilisateur vérifie l'exactitude du résultat ou, dans le cas d'un résultat de reconnaissance inexact, saisisse une correction de celui-ci.

Si le programme de reconnaissance de caractères est hébergé dans un serveur distant relié à un réseau de communication, l'unité informatique doit alors être un terminal de communication relié au même réseau. Le caractère manuscrit saisi est envoyé au serveur à partir de l'unité informatique, sous forme de données graphiques. Il est reconnu lors d'une exécution du programme de reconnaissance par le serveur, et le résultat de la reconnaissance est retourné à l'unité informatique, via le réseau de communication. Il est ensuite présenté à l'utilisateur afin d'être validé ou corrigé.

Un tel fonctionnement, selon lequel le programme de reconnaissance de caractères est hébergé et exécuté en dehors de l'unité informatique, est particulièrement avantageux. En effet, les programmes de reconnaissance de caractères sont volumineux et nécessitent une mémoire et un processeur de capacités suffisantes. L'hébergement et l'exécution du programme de reconnaissance de caractères en dehors de l'unité informatique permettent d'utiliser, en liaison avec le périphérique, un terminal de communication de dimension réduite, tel qu'un assistant personnel ou un terminal de communication sans fil.

La présentation du résultat de la reconnaissance du caractère manuscrit saisi, sa validation par l'utilisateur et éventuellement sa correction, sont effectuées en utilisant un logiciel spécifique implanté dans le terminal. Or un tel logiciel nécessite encore que le terminal dispose d'une capacité de traitement informatique suffisante. Cette exigence constitue un obstacle à l'utilisation d'un terminal de dimensions réduites en liaison avec le périphérique de saisie des caractères manuscrits.

Un but de la présente invention consiste donc à proposer un mode de saisie de caractères manuscrits qui est compatible avec l'utilisation d'un terminal de communication ayant une capacité limitée de traitement et de restitution de données.

Pour cela, l'invention propose un procédé de saisie de caractères manuscrits qui comprend les étapes suivantes :
a- saisie d'au moins un caractère manuscrit à l'aide d'un périphérique relié à un terminal sans fil de communication ;
b- transmission de données graphiques du caractère manuscrit à un serveur applicatif, à partir du terminal par l'intermédiaire d'un réseau de communication reliant le terminal au serveur applicatif ;
c- réception, par le terminal et par l'intermédiaire du réseau de communication, d'un premier message contenant un résultat d'une reconnaissance du caractère manuscrit ;
d- présentation du résultat de la reconnaissance du caractère manuscrit au moyen du terminal, et
e- saisie, au moyen du terminal, d'une validation du résultat de la reconnaissance du caractère manuscrit si le résultat est correct, sinon saisie d'une demande de modification du résultat.

Selon l'invention, les étapes d et e sont réalisées en exécutant des codes de programmation inscrits dans un module d'identification d'abonné incorporé dans le terminal sans fil de communication.

Etant donné que les codes de programmation nécessaires au sein du terminal pour mettre en oeuvre un procédé de saisie selon l'invention sont contenus dans un module d'identification d'abonné, tout type de terminal sans fil de communication peut être utilisé. En particulier, il est possible d'utiliser un terminal sans fil doté d'une capacité limitée de traitement de données. Le terminal peut donc être constitué d'un équipement de communication sans fil peu encombrant et ayant une faible consommation énergétique, auquel est relié le module d'identification d'abonné.

Les codes de programmation nécessaires pour le procédé peuvent être inscrits dans le module d'identification d'abonné avant que l'utilisateur se procure le module. Aucun logiciel spécifique ne doit alors être installé dans le terminal sans fil de communication par l'utilisateur. La mise en ceuvre du procédé par l'utilisateur peut donc être particulièrement simple et directe.

De façon préférée, les codes de programmation des étapes d et e sont automatiquement exécutés en réponse à la réception du premier message par le terminal sans fil. Il en résulte une réduction des opérations exécutées par l'utilisateur, et donc une simplification de la mise en ceuvre du procédé.

Selon un perfectionnement de l'invention, les étapes d et e peuvent être exécutées conformément à au moins une commande prédéfinie et contenue dans le premier message, cette commande étant interprétée au moyen de certains des codes de programmation inscrits dans le module d'identification d'abonné. Ainsi, la présentation du résultat de reconnaissance du caractère manuscrit, ainsi que la saisie de la validation de ce résultat ou celle d'un résultat corrigé, peuvent être adaptées, dans leur exécution, en fonction de commandes transmises dans le premier message.

Lorsque le caractère manuscrit destiné à être reconnu est contenu dans une zone particulière d'une page saisie, le premier message reçu par le terminal à l'étape c peut contenir en outre une indication de la zone dans la page qui contient ce caractère. Le résultat de la reconnaissance du caractère manuscrit est alors présenté à l'étape d avec l'indication de cette zone de page. De cette façon, la vérification par l'utilisateur de l'exactitude du résultat de la reconnaissance du caractère est facilitée.

Le procédé de saisie du caractère manuscrit peut aussi comprendre une étape f, effectuée après l'étape e, lors de laquelle un second message est envoyé par le terminal au serveur applicatif. Ce second message contient une indication de la validation du résultat de la reconnaissance du caractère manuscrit ou une indication de la demande de modification du résultat. L'étape f est aussi réalisée en exécutant des codes de programmation inscrits dans le module d'identification d'abonné du terminal sans fil de communication.

Eventuellement, lorsque le résultat de la reconnaissance du caractère manuscrit est inexact, l'indication de la demande de modification du résultat peut contenir un résultat corrigé de reconnaissance du caractère manuscrit saisi. Ce résultat est saisi au moyen du terminal sans fil de communication. Le serveur applicatif peut alors remplacer le résultat inexact de la reconnaissance du caractère par le résultat corrigé dans le fichier obtenu à la suite de la reconnaissance des caractères manuscrits de la page.

L'invention propose en outre un module d'identification d'abonné pour équipement sans fil de communication, dans lequel sont inscrits des codes de programmation des étapes d et e d'un procédé de saisie de caractères manuscrits tel que décrit précédemment.

Eventuellement, les codes de programmation des saisies de la validation du résultat et de la demande de modification du résultat peuvent être adaptés de sorte que ces codes sont exécutés en réponse à la réception, par le terminal, du premier message qui contient le résultat de la reconnaissance du caractère manuscrit.

Des codes de programmation peuvent aussi être inscrits dans le module d'identification d'abonné pour incorporer, dans un second message, une indication de la validation du résultat de la reconnaissance du caractère manuscrit ou une indication de la demande de modification du résultat, et pour envoyer le second message au serveur applicatif.

Enfin, des codes peuvent encore être inscrits dans le module d'identification d'abonné pour incorporer, dans le second message, un résultat corrigé de reconnaissance du caractère manuscrit, lorsque le second message contient une indication de demande de modification du résultat de la reconnaissance du caractère manuscrit.

L'invention propose encore un terminal de communication qui comprend un équipement sans fil de communication adapté pour être relié à un réseau de communication et muni d'une connexion pour recevoir, indépendamment du réseau de communication, des données produites par un périphérique de saisie de caractères manuscrits, et qui comprend un module d'identification d'abonné relié à l'équipement sans fil de communication et adapté pour contenir des codes de programmation. L'équipement sans fil de communication comprend lui-même des circuits adaptés pour transmettre, par l'intermédiaire du réseau de communication, des données graphiques d'un caractère manuscrit saisi au moyen du périphérique, et adaptés en outre pour exécuter les codes de programmation inscrits dans le module. Certains des codes de programmation inscrits dans le module d'identification d'abonné correspondent à une exécution des étapes d et e d'un procédé de saisie de caractères manuscrits tel que décrit précédemment.

L'invention propose enfin un système adapté pour mettre en oeuvre un procédé de saisie de caractères manuscrits selon l'invention. Un tel système comprend un terminal sans fil de communication, un périphérique de saisie de caractères manuscrits relié au terminal, un serveur applicatif et un réseau de communication reliant le terminal et le serveur applicatif.

D'autres particularités et avantages de la présente invention apparaîtront dans la description ci-après d'un exemple de mise en oeuvre non limitatif, en référence aux dessins annexés, dans lesquels :
- la figure 1 illustre un système adapté pour la mise en oeuvre d'un procédé de saisie selon l'invention ;
- la figure 2 illustre une structure logicielle d'un module d'identification d'abonné utilisé dans un système conforme à la figure 1, et
- la figure 3 est un diagramme des étapes d'un procédé de saisie selon l'invention.

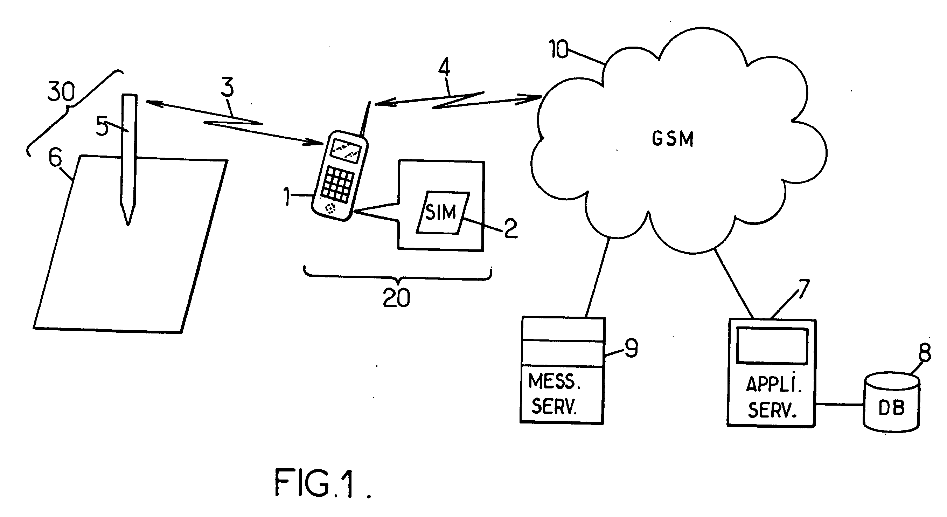

Conformément à la figure 1, un terminal sans fil de communication 20 et un serveur applicatif 7 sont reliés à un réseau de communication 10, par exemple de type GSM. Le serveur 7, noté APPLI. SERV., est programmé pour traiter des informations recueillies de façon manuscrite sur des formulaires prédéfinis. La structure des formulaires est enregistrée dans une base de données 8, notée DB pour DataBase en anglais, connectée au serveur 7.

Eventuellement, le programme de reconnaissance de caractères peut être exécuté par un serveur dédié (non représenté) relié au réseau de communication. Dans ce cas, un programme de reconnaissance de caractères particulièrement évolué peut être utilisé, qui permet notamment de réduire le nombre d'erreurs de reconnaissance de caractères. Les données graphiques des caractères manuscrits doivent alors être transmises par le serveur applicatif au serveur de reconnaissance de caractères. Alternativement, le programme de reconnaissance de caractères peut être exécuté par le serveur applicatif lui-même. Aucune transmission de données n'est alors nécessaire entre le serveur applicatif et un serveur dédié à la reconnaissance de caractères manuscrits. Un traitement particulièrement rapide des caractères saisis peut être obtenu avec cette dernière configuration.

Le terminal sans fil 20 est relié au réseau 10 par la liaison radio 4. Il comprend un équipement de communication sans fil 1 et un module d'identification d'abonné, de type carte SIM (pour «Subscriber Identification Module», en anglais), référencé 2 sur la figure. L'équipement 1 peut être un téléphone sans fil. La carte 2 est reliée à l'équipement 1 d'une façon habituelle, par exemple conformément aux recommandations ETSI de GSM. Elle comprend des registres de mémoires dans lesquels sont stockées différentes données, dont certaines sont énumérées plus loin.

L'équipement 1 possède en outre des moyens de transmission procurant une liaison 3 avec un périphérique de saisie de caractères manuscrits 30. La liaison 3 est indépendante de la liaison 4 et du réseau de communication 10. Ce peut être une liaison de transmission locale, dont la portée est limitée à quelques dizaines de mètres, par exemple de type radio ou infrarouge. En particulier, la liaison 3 peut être du type Bluetooth®, connu de l'Homme du métier.

Le périphérique 30 peut être du type stylo optique, qui comprend un stylet 5 et une table 6 sur laquelle des caractères peuvent être tracés manuellement à l'aide du stylet. La table 6 est par exemple une partie d'un écran tactile sur lequel peut être présenté un formulaire destiné à être rempli.

Alternativement, le périphérique de saisie de caractères manuscrits 30 peut comprendre une surface de détection tactile.

Etant donné que le terminal 20 et le périphérique 30 sont les seuls dispositifs dont doit disposer un utilisateur pour mettre en oeuvre un procédé de saisie selon l'invention, l'encombrement réduit de ces appareils rend le procédé particulièrement adapté pour une utilisation professionnelle, lors d'un déplacement ou sur un chantier.

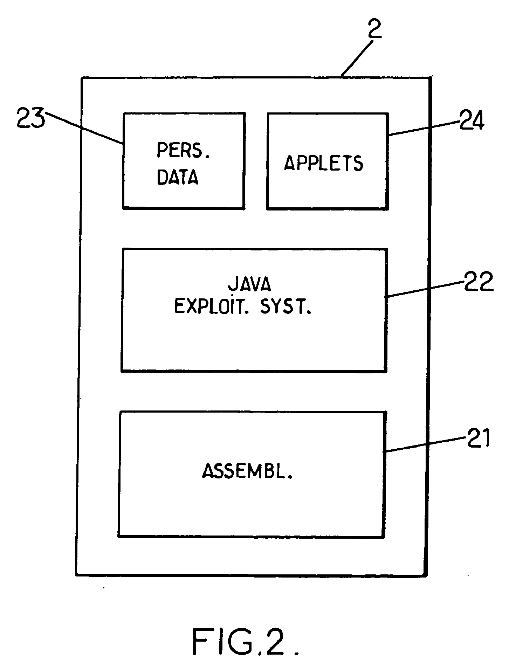

La figure 2 illustre la structure logicielle de la carte SIM 2. Elle comprend un noyau de programmation en langage assembleur, référencé 21, inscrit dans la carte 2 lors de sa fabrication. Un système d'exploitation 22 constitue une interface entre le noyau de programmation 21 et l'équipement 1. Actuellement, le système d'exploitation 22 utilisé est JAVA. De façon connue, au sein de la carte 2, le système JAVA met à disposition de l'opérateur du réseau de communication plusieurs mémoires, accessibles par le répertoire DFgsm. Des premières mémoires de la carte 2 sont destinées au stockage de diverses données, telles que des données d'identification d'un abonné au réseau de communication 10, des données d'authentification d'un utilisateur du terminal 20, etc. De telles données sont appelées données de personnalisation de la carte 2 et sont indiquées par la référence 23 sur la figure 2. D'autres données peuvent être stockées de la même manière dans la carte 2, telles qu'une table de services autorisés, une liste de réseaux préférentiels, la dernière zone identifiée de localisation du terminal sans fil 20, etc.

Des secondes mémoires sont en outre à la disposition de l'opérateur du réseau au sein de la carte 2, qui sont accessibles par le sous-répertoire DFgsm/DFtoolkit. Ces secondes mémoires sont destinées au stockage de mini-applications, appelées applets et référencées 24 sur la figure 2. Une applet utilise des outils spécifiés dans la partie «SIM Application Toolkit» des recommandations ETSI 11.14 de GSM. Elle comprend des commandes d'actions que la carte 2 envoie à l'équipement 1. Les actions sont accomplies par l'équipement 1 lorsque l'applet est exécutée. Une applet peut aussi commander un dialogue entre la carte 2 et l'équipement 1 (ETSI 3.40 et 3.48 de GSM). De façon connue, l'applet peut être stockée initialement dans la carte 2, lors de la fabrication de celle-ci, ou être téléchargée lors d'une session de communication établie via le réseau 10 entre le terminal 20 et un serveur de l'opérateur du réseau 10.

Des exemples d'actions exécutées par l'équipement 1 qui peuvent être programmées sous forme d'applets sont l'affichage, sur un écran de l'équipement 1, de données reçues par la liaison 4 ou de menus mémorisés au sein du terminal 20. Une transmission de données par l'équipement 1 via la liaison de transmission 4 peut aussi être programmée sous forme d'une applet. Dans ce dernier cas, l'applet comprend notamment les instructions nécessaires pour disposer des données d'accès et des données à transmettre (ou «payload») dans les champs de trames de transmission.

Les messages transmis au ou reçus par le terminal 20 par l'intermédiaire du réseau 10 peuvent être échangés de différentes façons. Dans le mode de mise en oeuvre décrit ici, les messages échangés entre le serveur applicatif 7 et le terminal 20 sont de format SMS («Short Message Services») tel que défini dans la norme GSM connue de l'Homme du métier. La taille de tels messages, limitée à 160 caractères, est suffisante pour contenir les données qui interviennent dans le procédé, et permet une transmission particulièrement rapide et efficace de celles-ci.

Au moins un serveur de messages 9, noté MESS. SERV. sur la figure 1, peut en outre être connecté au réseau 10 par l'opérateur qui offre le service de transmission des messages SMS. Un tel serveur 9, qui n'est pas indispensable pour mettre en oeuvre l'invention, peut avoir différentes fonctions, dont la gestion des messages SMS transportés par le réseau, des opérations de routage, un suivi des messages, une gestion de files d'attente de messages, la définition de la durée de vie des messages, un stockage des messages lorsque le terminal de destination est occupé, n'est pas disponible ou que sa mémoire tampon d'entrée est saturée, etc. Il s'agit soit de fonctions de base du procédé de transmission SMS, fixées par la norme GSM, soit de fonctions supplémentaires introduites par l'opérateur pour offrir un service amélioré de transmission SMS. Certains au moins des messages échangés lors d'une mise en oeuvre de l'invention peuvent alors transiter par le serveur de messages 9.

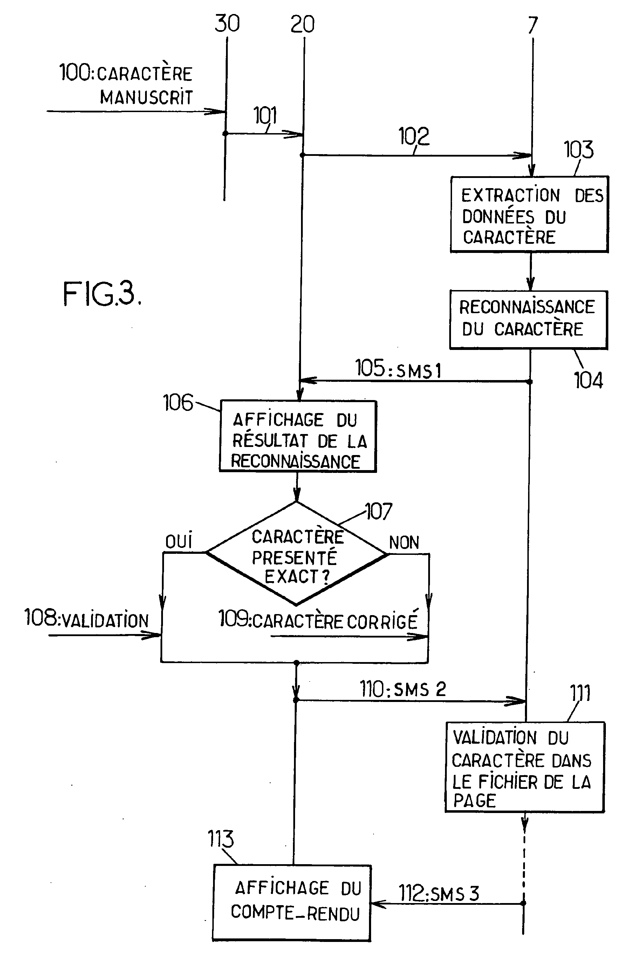

Un procédé selon l'invention est maintenant décrit en référence aux figures 1 et 3, pour la saisie de réponses à un formulaire. De façon préférée, le formulaire, qui constitue la page traitée, est une image affichée sur l'écran de la table 6.

Le formulaire est rempli lors d'une étape initiale 100 en inscrivant manuellement, à l'aide du stylo optique 30, des caractères manuscrits dans des cases prédéfinies du formulaire. Le tracé de chaque caractère est converti en données graphiques, spatiales ou spatiotemporelles, au sein du stylo optique 30. Le format de ces données graphiques peut être celui d'une image «bitmap» ou vectorielle, par exemple. Les données sont alors transmises au terminal 20 par la liaison 3 (étape 101 de la figure 3), puis au serveur applicatif 7 par la liaison radio 4 et par le réseau de communication 10 (étape 102).

Lors d'une première étape de traitement 103 exécutée au sein du serveur 7, ces données sont séparées les unes des autres. Différents critères de séparation peuvent être utilisés, tels que la continuité du tracé de caractères ou la zone du formulaire dans laquelle se trouve chaque caractère manuscrit. Eventuellement, plusieurs critères peuvent être combinés pour cette séparation. Des logiciels bien connus de l'Homme du métier sont disponibles à ce jour, qui peuvent être utilisés pour exécuter cette séparation.

Lorsque la séparation des données graphiques correspondant à différents caractères manuscrits est basée sur un découpage du formulaire en zones, la séparation est opérée à partir des coordonnées des points qui composent les caractères. Ces coordonnées sont comparées à des limites de zones qui peuvent correspondre, par exemple, aux bords de cases du formulaire dans lesquelles les caractères doivent être écrits. Ces limites de zones du formulaire sont contenues dans un fichier du formulaire stocké dans la base de données 8 et accessible à partir du serveur 7. Ce fichier peut être établi selon le format XML par exemple.

Les données graphiques ainsi séparées qui correspondent à un même caractère sont alors extraites de celles correspondant aux autres caractères inscrits sur le formulaire. L'image du formulaire rempli est ainsi découpée en images élémentaires de dimensions réduites, selon un découpage qui coïncide à la séparation entre les caractères saisis. Les images élémentaires sont ensuite traitées une à une, indépendamment les unes des autres.

Une telle extraction des données graphiques d'au moins un caractère manuscrit parmi les données graphiques d'un ensemble de caractères manuscrits saisis sur une même page n'est pas indispensable à la mise en oeuvre de l'invention. Elle est effectuée de préférence par le serveur applicatif, par exemple en utilisant des données descriptives de la page selon le format XML, disponibles pour le serveur applicatif. Les données graphiques d'un caractère manuscrit peuvent être extraites parmi celles de l'ensemble des caractères saisis dans la page en utilisant différents critères d'extraction. En particulier, elles peuvent être extraites en utilisant des coordonnées d'une zone de la page destinée à contenir le caractère manuscrit.

Lors d'une deuxième étape de traitement 104 réalisée au sein du serveur 7, le caractère manuscrit saisi dans chaque zone du formulaire est reconnu. Pour cela, un programme de reconnaissance de caractères est exécuté à partir des données graphiques extraites. Le programme fournit alors un résultat de reconnaissance du caractère contenu dans la zone. Ce résultat peut être une lettre ou un chiffre. Ce peut être aussi un signe qui indique une présence ou une absence de caractère dans cette zone.

Le serveur 7 adresse alors un message au terminal 20 (étape 105). Ce message, noté SMS 1 sur la figure 3, contient le résultat de la reconnaissance du caractère. Lorsqu'une extraction de données graphiques d'un nombre réduit de caractères a été opérée, le message SMS 1 envoyé au terminal 20 ne concerne que le ou les caractère(s) dont les données graphiques ont été extraites. Il est donc court et les traitements informatiques réalisés ensuite au sein du terminal sont réduits en conséquence. L'extraction des données permet donc une réduction supplémentaire de la capacité de traitement informatique nécessaire au sein du terminal sans fil.

Avantageusement, la zone du formulaire correspondant au caractère est identifiée par un code, tel qu'un numéro ou un nom de zone, ou encore par un idéogramme. L'identifiant de la zone concernée du formulaire peut alors être transmis dans le message SMS 1 avec le résultat de la reconnaissance du caractère.

Selon un perfectionnement de l'invention, le message SMS 1 peut comprendre, en plus du résultat de la reconnaissance du caractère et éventuellement de l'identifiant de la zone du formulaire, une ou plusieurs commandes. Ces commandes peuvent être codées sous forme de script, par exemple, et peuvent être interprétées par une applet stockée dans la carte 2. Elles sont destinées à provoquer l'exécution par l'applet d'une succession d'actions prédéfinie, qui peuvent comprendre l'affichage d'un texte sur l'écran de l'équipement 1, une demande de saisie de caractères en fonction d'options de saisie proposées par affichage, et l'envoi d'un message en réponse à un destinataire donné, pouvant être le serveur 7.

De préférence, le texte résultant de la reconnaissance du ou des caractère(s) manuscrit(s) est intégré directement dans une commande qui, lorsqu'elle est interprétée et exécutée par l'applet, provoque les opérations suivantes :
- l'affichage de ce texte sur l'écran de l'équipement 1, sous une forme adaptée pour que le texte puisse être modifié par l'utilisateur ;
- la saisie de la modification éventuelle du texte, et
- l'envoi au serveur 7 d'un second message qui comprend le texte modifié.

L'identifiant de zone et le résultat de la reconnaissance du caractère manuscrit contenu dans cette zone sont alors affichés sur un écran de l'équipement 1 (étape 106). Cet affichage est programmé sous forme d'applet spécifique stockée dans le module 2 et activée automatiquement par la réception du message SMS 1.

L'utilisateur valide alors le résultat si celui-ci est exact (étapes 107 et 108) ou demande une modification de celui-ci lorsque le résultat présenté est erroné. La validation peut être saisie à l'aide d'une touche de l'équipement 1 affectée à cette fonction. La demande de modification du résultat de la reconnaissance du caractère peut être effectuée de plusieurs façons. Selon une première façon d'opérer, l'utilisateur saisit un résultat corrigé sur un clavier de l'équipement 1 (étape 109). Selon une deuxième façon d'opérer, des paramètres du programme de reconnaissance de caractères sont modifiés, et les étapes 104 à 108 précédemment décrites sont répétées avec des paramètres modifiés. Selon une troisième façon d'opérer, l'utilisateur commande, à partir de l'équipement 1, une nouvelle saisie du caractère manuscrit incorrectement reconnu, et les étapes 100 à 108 sont exécutées de nouveau.

Le terminal 20 retourne alors un message SMS 2 au serveur 7 (étape 110), qui contient soit une indication de validation du résultat de la reconnaissance de caractère, soit un résultat corrigé. Selon le mode opératoire choisi en cas de résultat inexact de la reconnaissance du caractère manuscrit, le message SMS 2 peut contenir, à la place du résultat corrigé, une demande de répétition des étapes 104-108 ou des étapes 100-108.

Les étapes 107 à 110 précédemment décrites sont programmées dans le module d'identification d'abonné 2 à la suite des codes de programmation de l'étape 106.

Si l'utilisateur saisit un résultat corrigé ou valide un nouveau résultat pour la reconnaissance d'un caractère donné, ce résultat corrigé ou nouveau est enregistré à la place de celui précédemment obtenu pour le même caractère et la même zone du formulaire (étape 111). Dans le cas d'un résultat exact de reconnaissance de caractère délivré à l'étape 104, ce résultat est maintenu au sein du serveur 7.

Les étapes 100 à 111 sont répétées pour chaque zone du formulaire.

Lorsque les caractères manuscrits inscrits dans toutes les zones du formulaire ont ainsi été reconnus et validés successivement, le serveur 7 peut regrouper tous les résultats de reconnaissance, associés aux identifiants des zones correspondantes, dans un fichier de page unique correspondant au formulaire complet rempli. Le serveur 7 adresse alors un compte-rendu final de saisie au terminal 20, dans un nouveau message transmis par le réseau 10 puis par la liaison radio 4 (étape 112). Ce message de transport du compte-rendu est encore du type SMS et est noté SMS 3 sur la figure 3. En exécutant une applet dédiée, l'équipement 1 affiche le contenu du compte-rendu (étape 113). L'exactitude de l'ensemble du fichier correspondant à la page après que tous les caractères manuscrits ont été reconnus peut alors être vérifiée de façon globale par l'utilisateur.

Un procédé selon l'invention permet donc de vérifier immédiatement, lors de la saisie de caractères manuscrits, que ces caractères sont correctement reconnus, tout en utilisant un terminal qui possède une capacité de traitement de données limitée. Il est entendu que de nombreuses modifications peuvent être apportées au procédé qui a été décrit en détail pour illustrer l'invention. En particulier, certaines étapes du procédé, et notamment les étapes 106-110 de présentation et de validation ou correction du résultat de la reconnaissance peuvent être exécutées simultanément pour plusieurs zones. Un tel regroupement peut être avantageux lorsque des zones différentes sont destinées à recevoir des lettres d'un même mot ou des chiffres d'un même nombre. La validation en une fois par l'utilisateur de l'ensemble des caractères des zones concernées est alors plus conviviale, plus facile et plus rapide.

## Revendications

1. Procédé de saisie de caractères manuscrits comprenant les étapes suivantes :
a- saisie d'au moins un caractère manuscrit (100) à l'aide d'un périphérique (30) relié à un terminal sans fil de communication (20) ;
b- transmission (102) de données graphiques du caractère manuscrit à un serveur applicatif (7), à partir du terminal (20) par l'intermédiaire d'un réseau de communication (10) reliant ledit terminal audit serveur applicatif ;
c- réception, par le terminal (20) et par l'intermédiaire du réseau de communication (10), d'un premier message (105) contenant un résultat d'une reconnaissance du caractère manuscrit ;
d- présentation (106) du résultat de la reconnaissance du caractère manuscrit au moyen du terminal (20), et
e- saisie, au moyen du terminal (20), d'une validation du résultat de la reconnaissance du caractère manuscrit si ledit résultat est correct (108), sinon saisie d'une demande de modification dudit résultat (109),
les étapes d et e étant réalisées en exécutant des codes de programmation inscrits dans un module d'identification d'abonné (2) incorporé dans le terminal sans fil de communication (20).

2. Procédé selon la revendication 1, suivant lequel les codes de programmation des étapes d et e sont exécutés en réponse à la réception dudit premier message par ledit terminal sans fil (105).

3. Procédé selon la revendication 1 ou 2, suivant lequel les étapes d et e sont exécutées conformément à au moins une commande prédéfinie contenue dans ledit premier message (105), ladite commande étant interprétée au moyen de certains des codes de programmation inscrits dans le module d'identification d'abonné (2) du terminal sans fil de communication (20).

4. Procédé selon l'une quelconque des revendications précédentes, suivant lequel :
- lors de l'étape c, ledit premier message (105) contient en outre une indication d'une zone de page contenant le caractère manuscrit saisi, et
- lors de l'étape d, le résultat de la reconnaissance du caractère manuscrit est présenté avec l'indication de la zone de page.

5. Procédé selon l'une quelconque des revendications précédentes, comprenant en outre l'étape suivante :
f- envoi d'un second message (110) par le terminal (20) au serveur applicatif (7) par l'intermédiaire du réseau de communication (10), ledit second message contenant une indication de la validation du résultat de la reconnaissance du caractère manuscrit présenté (108) ou une indication de la demande de modification dudit résultat (109),
l'étape f étant réalisée en exécutant des codes de programmation inscrits dans le module d'identification d'abonné (2) du terminal sans fil de communication (20).

6. Procédé selon la revendication 5, suivant lequel l'indication de la demande de modification du résultat (109) contient un résultat corrigé de reconnaissance du caractère manuscrit saisi.

7. Module d'identification d'abonné (2) pour équipement sans fil de communication (1), dans lequel sont inscrits des codes (24) de programmation des étapes suivantes d'un procédé de saisie de caractères manuscrits :
- présentation (106) d'un résultat de reconnaissance d'un caractère manuscrit au moyen d'un équipement sans fil de communication (1) relié audit module, ledit résultat étant contenu dans un premier message (105) reçu par un terminal (20) relié à un réseau de communication (10) et comprenant ledit équipement et ledit module (2), et
- saisie, au moyen de l'équipement sans fil de communication (1), d'une validation du résultat de la reconnaissance du caractère manuscrit si ledit résultat est correct (108), sinon saisie d'une demande de modification dudit résultat (109).

8. Module selon la revendication 7, dans lequel les codes de programmation des saisies de la validation du résultat (108) et de la demande de modification dudit résultat (109) sont adaptés de sorte que lesdits codes sont exécutés en réponse à la réception, par le terminal (20), du premier message (105) contenant le résultat de la reconnaissance du caractère manuscrit.

9. Module selon la revendication 7 ou 8, dans lequel sont inscrits en outre des codes de programmation pour incorporer, dans un second message (110), une indication de la validation du résultat de la reconnaissance du caractère manuscrit (108) ou une indication de la demande de modification dudit résultat (109), et pour envoyer ledit second message à un serveur applicatif (7) relié au terminal (20) par l'intermédiaire du réseau de communication (10).

10. Module selon la revendication 9, dans lequel sont inscrits en outre des codes de programmation pour incorporer, dans le second message (110), un résultat corrigé de reconnaissance du caractère manuscrit lorsque ledit second message contient une indication de demande de modification du résultat de la reconnaissance du caractère manuscrit.

11. Terminal de communication (20) comprenant :
- un équipement sans fil de communication (1) adapté pour être relié à un réseau de communication (10) et muni d'une connexion pour recevoir, indépendamment du réseau de communication, des données produites par un périphérique de saisie de caractères manuscrits (30) ; et
- un module d'identification d'abonné (2) relié à l'équipement sans fil de communication (1) et adapté pour contenir des codes de programmation,
ledit équipement (1) comprenant des circuits adaptés pour transmettre, par l'intermédiaire du réseau de communication (10), des données graphiques d'un caractère manuscrit saisi au moyen du périphérique (30), et adaptés en outre pour exécuter les codes de programmation inscrits dans le module (2),
certains codes (24) de programmation inscrits dans le module (2) correspondant à une exécution des étapes suivantes d'un procédé de saisie de caractères manuscrits :
- présentation (106) d'un résultat de reconnaissance d'un caractère manuscrit au moyen de l'équipement sans fil de communication (1), ledit résultat étant contenu dans un premier message (105) reçu par le terminal (20) par l'intermédiaire du réseau de communication (10), et
- saisie, au moyen de l'équipement sans fil de communication (1), d'une validation du résultat de la reconnaissance du caractère manuscrit si ledit résultat est correct (108), sinon saisie d'une demande de modification dudit résultat (109).

12. Système comprenant un terminal sans fil de communication (20), un périphérique de saisie de caractères manuscrits (30) relié audit terminal, un serveur applicatif (7) et réseau de communication (10) reliant ledit terminal et ledit serveur applicatif, ledit système étant adapté pour mettre en oeuvre un procédé de saisie de caractères manuscrits selon l'une quelconque des revendications 1 à 6.
